# EUROPÄISCHE PATENTSCHRIFT

(11) **EP 1 865 230 B1**
(45) Veröffentlichungstag und Bekanntmachung des Hinweises auf die Patenterteilung: **17.10.2012**
(21) Anmeldenummer: 07109576.4
(22) Anmeldetag: 05.06.2007
(51) Int. Cl.: F16H 61/04, F16H 61/686

(54) **Verfahren zum Betreiben eines Automatgetriebes**
Method for operating an automatic transmission
Procédé destiné au fonctionnement d'une boîte de vitesse automatique

(30) Priorität: 08.06.2006 DE 102006026599
(43) Veröffentlichungstag der Anmeldung: 12.12.2007
(73) Patentinhaber: ZF Friedrichshafen AG, 88038 Friedrichshafen (DE)
(72) Erfinder: Klein, Gerald, 88046 Friedrichshafen (DE); Popp, Christian, 88079 Kressbronn (DE); Steinhauser, Klaus, 88079 Kressbronn (DE)

(56) Entgegenhaltungen:
- EP-A2- 1 219 868
- EP-A2- 1 398 537
- DE-A1- 10 035 479

## Beschreibung

Die Erfindung betrifft ein Verfahren zum Betreiben eines Automatgetriebes nach dem Oberbegriff des Anspruchs 1.

Fahrzeuge benötigen Getriebe, um Drehmomente und Drehzahlen zu wandeln. Aufgabe eines Fahrzeuggetriebes ist es, das Zugkraftangebot eines Antriebsaggregats umzusetzen. Die hier vorliegende Erfindung betrifft ein Verfahren zum Betreiben eines Automatgetriebes. Im Sinne der hier vorliegenden Erfindung sollen unter dem Begriff Automatgetriebe alle Getriebe mit einem automatischen Gangwechsel verstanden werden, die auch als Stufenautomatgetriebe bezeichnet werden.

Aus de gattungsgemäßen DE 100 35 479 A1 ist ein Verfahren zum Betreiben eines Automatgetriebes bekannt, bei welchem zur Verbesserung der Schaltgeschwindigkeit aufeinanderfolgender Hochschaltungen bzw. aufeinanderfolgender Rückschaltungen Schaltungen verschachtelt ausführbar sind. Hierzu wird während jeder ersten Hochschaltung bzw. Rückschaltung ein für die nachfolgende zweite Hochschaltung bzw. Rückschaltung benötigtes Schaltelement während der laufenden ersten Hochschaltung bzw. Rückschaltung derart vorbereitet, dass bei Erreichen einer Synchrondrehzahl der laufenden ersten Hochschaltung bzw. Rückschaltung die sofortige Durchführung der nachfolgenden zweiten Hochschaltung bzw. Rückschaltung möglich ist. Dabei werden nach der DE 100 35 479 A1 lediglich Einfachschaltungen miteinander verschachtelt, was bedeutet, dass jede ausgeführte erste Hochschaltung bzw. Rückschaltung sowie jede nachfolgende zweite Hochschaltung bzw. Rückschaltung eine Einfachschaltung zwischen zwei unmittelbar aufeinanderfolgenden Gängen ist.

Aus der EP 1 219 868 A2 ist für ein Getriebe, bei dem in jedem Gang zwei Schaltelemente geschlossen sind, ein Verfahren zur Steuerung des Schaltablaufs einer per Schaltbefehl angeforderten Rückschaltung über drei Gangstufen bekannt, bei dem insgesamt vier der Schaltelemente des Getriebes beteiligt sind. Dabei wird im Laufe dieser Dreifach-Rückschaltung die Getriebeübersetzung ausgehend vom Ausgangsgang zunächst in einen Zwischengang und anschließen ausgehend von diesem Zwischengang in den durch den Schaltbefehl definierten Zielgang geführt. Hierzu wird zunächst das erste der beiden im Ausgangsgang geschlossenen Schaltelemente in Schlupf gebracht, ohne es vollständig zu öffnen, und zeitlich parallel dazu ein zuvor offenes Schaltelement, welches sowohl für den Zwischengang als auch für den Zielgang zur Drehmomentübertragung benötigt wird, zur Drehmomentübertragung gebracht, ohne es vollständig zu schließen. Bis zu diesem Zeitpunkt ähnelt der Schaltablauf also einer Doppel-Rückschaltung, die nicht vollständig beendet wird. Etwa in der Mitte dieses ersten Teiles der Dreifach-Rückschalung wird das zweite der beiden im Ausgangsgang geschlossenen Schaltelemente vom Druckniveau her abgesenkt, ohne es in Schlupf zu bringen, und ein weiteres zuvor offenes Schaltelement, welches im Zielgang als zweites drehmomentübertragendes Schaltelement benötigt wird, mit Druckmittel vorbefüllt, ohne dass es Drehmoment übertragen kann. Im sich anschließenden zweiten Teil der Dreifach-Rückschaltung wird nun das erste der beiden im Ausgangsgang geschlossenen Schaltelemente vollständig geöffnet, das zweite der beiden im Ausgangsgang geschlossenen Schaltelemente zunächst in Schlupf gebracht und dann vollständig geöffnet, das im Zielgang als erstes drehmomentübertragendes Schaltelement benötigte, aber noch nicht vollständig geschlossene Schaltelement vollständig geschlossen, und das im Zielgang als zweites drehmomentübertragendes Schaltelement benötigte Schaltelement zunächst in Drehmomentübertragung gebracht und anschließend vollständig geschlossen. Die zwei zeitlich beabstandeten Überschneidungsphasen - die erste am Ende des ersten Teils der Rückschaltung und die zweite kurz vor Ende des zweiten Teils der Rückschaltung - bewirken, dass der Fahrer den Übergang in den Zwischengang nicht als gesonderte Schaltung spürt, sondern den Eindruck einer direkten Schaltung vom Ausgangsgang in den Zielgang hat.

Die aus der EP 1 219 868 A2 bekannte Rückschaltung über drei Gangstufen funktioniert nur in Verbindung mit einer Getriebe-Schaltlogik, bei der einerseits zur Drehmomentübertragung im Zielgang zwei andere Schaltelemente benötigt werden als im Ausgangsgang, die andererseits aber auch ermöglicht eines der beiden im Zielgang benötigten Schaltelemente bereits während der ersten Teilschaltung drehmomentübertragend zu schalten.

Insbesondere dann, wenn bei Automatgetrieben die Ganganzahl steigt und die Übersetzungssprünge zwischen unmittelbar aufeinanderfolgenden Gängen kleiner werden, bereitet die Vorbereitung von Schaltelementen für eine zweite Hochschaltung bzw. Rückschaltung während der ersten Hochschaltung bzw. Rückschaltung im Sinne verschachtelter Einfachschaltungen Schwierigkeiten, da dann die zur Vorbereitung der Schaltelemente für die zweite Hochschaltung bzw. Rückschaltung benötigte Zeit während der ersten Hochschaltung bzw. Rückschaltung nicht zur Verfügung steht.

Hiervon ausgehend liegt der vorliegenden Erfindung das Problem zu Grunde, ein neuartiges Verfahren zum Betreiben eines Automatgetriebes zu schaffen. Dieses Problem wird durch ein Verfahren zum Betreiben eines Automatgetriebes gemäß Anspruch 1 gelöst. Erfindungsgemäß wird abhängig von einem auszuführenden Gangwechsel von einem Ist-Gang in einen Soll-Gang als erste Hochschaltung bzw. Rückschaltung eine Mehrfachschaltung gegenüber einer Einfachschaltung bevorzugt ausgeführt.

Im Sinne der hier vorliegenden Erfindung wird vorgeschlagen, zumindest in der ersten Hochschaltung bzw. Rückschaltung verschachtelter, aufeinanderfolgender Hochschaltungen bzw. Rückschaltungen Mehrfachschaltungen gegenüber Einfachschaltungen bevorzugt auszuführen. Durch die Ausführung einer Mehrfachschaltung als erste Hochschaltung bzw. Rückschaltung vergrö-βert sich der Übersetzungssprung für die erste Hochschaltung bzw. Rückschaltung, so dass dann für die Vorbereitung der darauffolgenden zweiten Hochschaltung bzw, Rückschaltung während der laufenden ersten Hochschaltung bzw. Rückschaltung mehr Zeit zur Verfügung steht. Es müssen dann während der ersten Hochschaltung bzw. Rückschaltung keine die Schaltgeschwindigkeit bzw. Schaltspontaneität negativ beeinträchtigenden Verzögerungsmaßnahmen für abschaltende Schaltelemente implementiert werden. Dies verbessert die Schallgeschwindigkeit sowie Schaltspontaneität von verschachtelt auszuführenden, aufeinanderfolgenden Hochschaltungen bzw. Rückschaltungen.

Nach einer ersten vorteilhaften Weiterbildung der Erfindung wird dann, wenn ein Gangwechsel zwischen zwei nicht unmittelbar aufeinanderfolgenden Gängen auszuführen ist, als erste Hochschaltung bzw. Rückschaltung immer eine Mehrfachschaltung ausgeführt, wobei während der laufenden ersten Hochschaltung bzw. Rückschaltung als nachfolgende zweite Hochschaltung bzw. Rückschaltung eine Einfachschaltung vorbereitet wird.

Nach einer zweiten vorteilhaften Weiterbildung der Erfindung wird dann, wenn ein Gangwechsel zwischen zwei nicht unmittelbar aufeinanderfolgenden Gängen auszuführen ist, als erste Hochschaltung bzw. Rückschaltung immer eine Mehrfachschaltung ausgeführt, wobei während der laufenden ersten Hochschaltung bzw. Rückschaltung als nachfolgende zweite Hochschaltung bzw. Rückschaltung ebenfalls eine Mehrfachschaltung vorbereitet wird.

Gemäß der Erfindung wird nur dann, wenn ein Gangwechsel zwischen zwei unmittelbar aufeinanderfolgenden Gängen auszuführen ist, als erste Hochschaltung bzw. Rückschaltung eine Einfachschaltung ausgeführt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert.

Dabei zeigt:
- Fig. 1: ein erstes Getriebeschema eines Automatgetriebes mit fünf Schaltelementen, bei welchem das erfindungsgemäße Verfahren vorteilhaft verwendbar ist;
- Fig. 2: eine Schaltelementmatrix für die Schaltelemente des Getriebeschemas der Fig. 1 zur Verdeutlichung, welche Schaltelemente in welchem Gang geschlossen sind;
- Fig. 3: ein zweites Getriebeschema eines Automatgetriebes mit fünf Schaltelementen, bei welchem das erfindungsgemäße Verfahren vorteilhaft verwendbar ist, und
- Fig. 4: eine Schaltelementmatrix für die Schaltelemente des Getriebe-schemas der Fig. 3 zur Verdeutlichung, welche Schaltelemente in welchem Gang geschlossen sind.

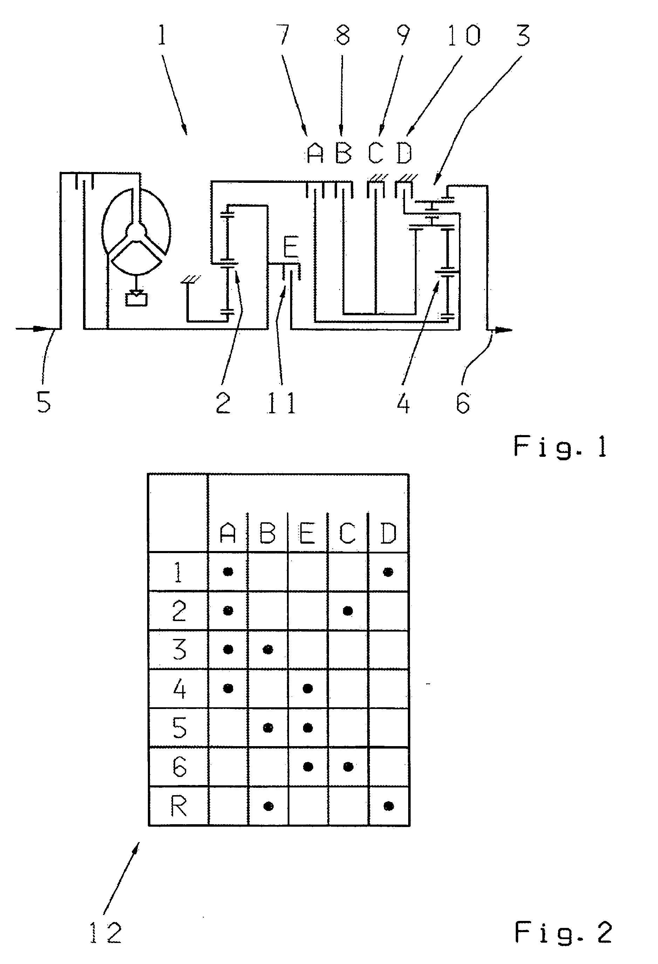

Fig. 1 zeigt ein erstes Getriebeschema 1 eines Stufenautomatgetriebes, bei weichem das erfindungsgemäße Verfahren zum Betreiben eines Automatgetriebes Verwendung finden kann. So verfügt das Automatgetriebe der Fig. 1 über mehrere Getrieberadsätze 2, 3 und 4 um ein an einem Getriebeeingang 5 anliegendes Getriebeeingangsmoment in ein Getriebeausgangsmoment an einem Getriebeausgang 6 umzusetzen. Die Getrieberadsätze 2, 3, 4 des Automatgetriebes sind dabei gemäß Fig. 1 als Planetenrad-Getrieberadsätze ausgeführt. Gemäß dem Getriebeschema 1 der Fig. 1 verfügt das Automatgetriebe neben den Getrieberadsätzen 2 bis 4 weiterhin über insgesamt fünf Schaltelemente 7, 8, 9, 10 und 11, wobei das Schaltelement 7 auch als Schaltelement. A, das Schaltelement 8 auch als Schaltelement B, das Schaltelement 9 auch als Schaltelement, C, das Schaltelement 10 auch als Schaltelement D und das Schaltelement 11 auch als Schaltelement E bezeichnet wird. Bei dem Schaltelement C sowie dem Schaltelement D handelt es sich jeweils um eine Bremse, bei den Schaltelementen A, B und E handelt es sich jeweils um Kupplungen.

Für das in Fig. 1 schematisiert dargestellte Automatgetriebe, welches die fünf Schaltelemente 7 bis 11 umfasst, können unter Verwendung der in Fig. 2 dargestellten Schaltungsmatrix 12 sechs Vorwärtsgänge sowie ein Rückwärtsgang realisiert werden, wobei in der linken Spalte der Schaltungsmatrix 12 die sechs Vorwärtsgänge "1" bis "6" sowie der Rückwärtsgang "R" und in der oberen Zeile der Schaltungsmatrix 12 die Schaltelemente A bis E aufgetragen sind. Schaltelemente, die in der Schaltelementmatrix 12 mit einem Punkt markiert sind, sind im jeweiligen Gang geschlossen.

In jedem Vorwärtsgang sowie im Rückwärtsgang sind demnach jeweils zwei der fünf Schaltelemente geschlossen. So sind z. B. für den Vorwärtsgang "1" die Schaltelemente A und D sowie für den Rückwärtsgang "R" die Schaltelemente B und D geschlossen. Die anderen Schaltelemente sind hingegen im jeweiligen Gang vollständig geöffnet. Zur Kraftübertragung bzw. Drehmomentübertragung vom Getriebeeingang 5 auf den Getriebeausgang 6 sind demnach bei dem in Fig. 1 dargestellten Automatgetriebe in jedem Gang zwei Schaltelemente vollständig geschlossen, drei Schaltelemente sind hingegen vollständig geöffnet.

Im Sinne der hier vorliegenden Erfindung werden zur Verbesserung der Schallgeschwindigkeit aufeinanderfolgende Hochschaltungen bzw. aufeinanderfolgende Rückschaltungen verschachtelt ausgeführt, nämlich derart, dass bei einer ersten Hochschaltung bzw. Rückschaltung mindestens ein für eine nachfolgende zweite Hochschaltung bzw. Rückschaltung benötigtes Schaltelement während der laufenden ersten Hochschaltung bzw. Rückschaltung vorbereitet wird, und zwar derart, dass bei Erreichen eines Synchronpunkts, vorzugsweise einer Synchrondrehzahl, der laufenden ersten Hochschaltung bzw. Rückschaltung die sofortige Durchführung der nachfolgenden zweiten Hochschaltung bzw, Rückschaltung möglich ist.

Dabei wird erfindungsgemäß abhängig von einem auszuführenden Gangwechsel von einem Ist-Gang in einen Soll-Gang als erste Hochschaltung bzw. Rückschaltung eine Mehrfachschaltung gegenüber einer Einfachschaltung bevorzugt ausgeführt. Ausschließlich dann, wenn ein Gangwechsel zwischen zwei unmittelbar aufeinanderfolgenden Gängen auszuführen ist, wird als erste Hochschaltung bzw. Rückschaltung eine Einfachschaltung ausgeführt, wobei dann während der laufenden ersten Hochschaltung bzw. Rückschaltung dann, wenn in derselben Schaltungsrichtung eine weitere Hochschaltung bzw. Rückschaltung möglich ist, als nachfolgende zweite Hochschaltung bzw. Rückschaltung ebenfalls eine Einfachschaltung vorbereitet wird.

Dann hingegen, wenn ein Gangwechsel zwischen zwei nicht unmittelbar aufeinander folgenden Gängen auszuführen ist, wird als erste Hochschaltung bzw. Rückschaltung stets eine Mehrfachschaltung ausgeführt, wobei während der laufenden ersten, als Mehrfachschaltung ausgeführten Hochschaltung bzw. Rückschaltung als nachfolgende zweite Hochschaltung bzw. Rückschaltung entweder eine Einfachschaltung oder ebenfalls eine Mehrfachschaltung vorbereitet wird.

Die nachfolgende Tabelle 1 zeigt für das Automatgetriebe der Fig. 1 und 2 eine exemplarische Ausgestaltung des erfindungsgemäßen Verfahrens, wobei gemäß der nachfolgenden Tabelle 1 aufeinanderfolgende Rückschaltungen sowie Hochschaltungen verschachtelt ausführbar sind.

| Tabelle 1 | Schaltelemente des Automatgetriebes der Fig. 1. 2 | | | | |
|---|---|---|---|---|---|
| | A | B | C | D | E |
| Rückschaltung | | | | | |
| 6-5 (5-4) | vz | z/va | a | - | x |
| 5-4 (4-3) | z | a/vz | - | - | va |
| 4-3 (3-2) | x | z/va | vz | - | a |
| 3-2 (2-1) | x | a | z/va | vz | - |
| 2-1 | x | - | a | z | - |
| 6-4(4-3) | z | vz | a | - | va |
| 5-3(3-2) | z | va | vz | - | a |
| 4-2(2-1) | x | - | z/va | vz | a |

| Hochschaltung | | | | | |
|---|---|---|---|---|---|
| 1-2(2-3) | x | vz | z/va | a | - |
| 2-3(3-4) | x | z/va | a | - | vz |
| 3-4(4-5) | va | a/vz | - | - | z |
| 4-5(5-6) | a | z/va | vz | - | x |
| 5-6 | - | a | z | - | x |

In der obigen Tabelle 1 sind in der linken Spalte verschachtelt ausführbare, aufeinaderfolgende Rückschaltungen sowie Hochschaltungen eingetragen, wobei dann, wenn in der linken Spalte hinter einer Rückschaltung bzw. Hochschaltung in Klammern eine weitere Rückschaltung bzw, Hochschaltung aufgeführt ist, es sich bei der nicht in Klammern gesetzten Rückschaltung bzw. Hochschaltung um die erste Rückschaltung bzw. Hochschaltung und bei der in Klammer gesetzten Rückschaltung bzw. Hochschaltung um die zweite Rückschaltung bzw. Hochschaltung handelt, für die während der laufenden ersten Rückschaltung bzw, Hochschaltung mindestens ein Schaltelement vorbereitet wird.

Nach der obigen Tabelle 1 werden erste Rückschaltungen entweder als Einfachrückschaltungen oder als Mehrfachrückschaltungen, nämlich als Doppelrückschaltungen, ausgeführt; nachfolgende zweite Rückschaltungen werden stets als Einfachrückschaltungen vorbereitet. Erste Hochschaltungen werden hingegen stets als Einfachhochschaltungen ausgeführt, ebenso wie vorzubereitende zweite Hochschaltungen, Im Sinne der hier vorliegenden Erfindung werden abhängig von einem auszuführenden Gangwechsel von einem Ist-Gang in einen Soll-Gang in der obigen Tabelle als erste Rückschaltungen Mehrfachschaltungen gegenüber Einfachschaltungen bevorzugt ausgeführt. Während einer solchen als erste Rückschaltung ausgeführten Mehrfachschaltung wird gemäß der obigen Tabelle als zweite Rückschaltung eine Einfachschaltung vorbereitet. Nur dann, wenn eine Rückschaltung zwischen unmittelbar eine ander folgenden Gängen auszuführen ist, wird als erste Rückschaltung eine Einfachschaltung ausgeführt, während der als zweite Rückschaltung ebenfalls eine Einfachrückschaltung vorbereitet wird.

Wird z. B. von einer Getriebesteuerung als Gangwechsel eine Rückschaltung vom Vorwärtsgang "6" in den Vorwärtsgang "5" vorgegeben, so wird unter Verwendung der obigen Tabelle als erste Rückschaltung eine Einfachrückschaltung vom Vorwärtsgang "6" in den Vorwärtsgang "5" durchgeführt, während derer als zweite Rückschaltung eine Einfachrückschaltung vom Vorwärtsgang "5" in den Vorwärtsgang "4" vorbereitet wird. Diese zweite Rückschaltung wird jedoch nur dann ausgeführt, wenn die Getriebesteuerung abhängig vom Fahrerwunsch erkennt, dass dieselbe auch gewünscht ist. Anderenfalls wird die während der ersten Rückschaltung vorbereitete zweite Rückschaltung abgebrochen.

Dann, wenn von einer Getriebesteuerung als auszuführender Gangwechsel eine Rückschaltung vom Vorwärtsgang "6" in den Vorwärtsgang "4" vorgegeben wird, wird erfindungsgemäß als erste Rückschaltung eine Mehrfachschaltung ausgeführt, nämlich vom Vorwärtsgang "6" in den Vorwärtsgang "4", wobei während der ersten Rückschaltung als zweite Rückschaltung eine Einfachrückschaltung vom Vorwärtsgang "4" in den Vorwärtsgang "3" vorbereitet wird, die jedoch wiederum nur dann ausgeführt wird, wenn dies einem Fahrerwunsch entspricht.

Wird z. B. von einer Getriebesteuerung als auszuführender Gangwechsel eine Rückschaltung vom Vorwärtsgang "5" in den Vorwärtsgang "2" vorgegeben, so wird als erste Rückschaltung gemäß der obigen Tabelle eine Mehrfachrückschaltung ausgeführt, nämlich vom Vorwärtsgang "5" in den Vorwärtsgang "3", wobei während dieser ersten Rückschaltung als zweite Rückschaltung die Einfachrückschaltung vom Vorwärtsgang "3" in den Vorwärtsgang "2" vorbereitet und bei Erreichen der Synchrondrehzahl der ersten Rückschaltung auch sofort ausgeführt wird.

In der obigen Tabelle sind Schaltelemente, die während einer auszuführenden ersten Hochschaltung bzw. Rückschaltung zugeschaltet und damit geschlossen werden, mit "z" gekennzeichnet. Schaltelemente, die hingegen während einer ersten Hochschaltung bzw. Rückschaltung abgeschaltet und damit geöffnet werden, sind in der obigen Tabelle mit "a" gekennzeichnet. Schaltelemente, die während einer ersten Hochschaltung bzw. Rückschaltung für eine nachfolgende zweite Hochschaltung bzw. Rückschaltung zum Zuschalten und damit Schließen oder zum Abschalten und damit Öffnen vorbereitet werden, sind in der obigen Tabelle mit "vz" oder "va" gekennzeichnet. Dann, wenn in der obigen Tabelle Schaltelemente mit "z/va" bzw, "a/vz" gekennzeich**net** sind, bedeutet dies, dass die jeweiligen Schaltelemente sowohl in der ersten Hochschaltung bzw. Rückschaltung als auch in der nachfolgenden zweiten Hochschaltung bzw. Rückschaltung beteiligt sind, wobei dann beim Übergang von der ersten Hochschaltung bzw. Rückschaltung auf die zweite Hochschaltung bzw, Rückschaltung für die jeweiligen Schaltelemente eine Minimalauswahl oder eine Maximalauswahl durchgeführt wird. Mit "x" gekennzeichnete Schaltelemente sind und bleiben während einer Schaltung geschlossen. Mit "-" gekennzeichnete Schaltelemente sind und bleiben während einer Schaltung hingegen geöffnet.

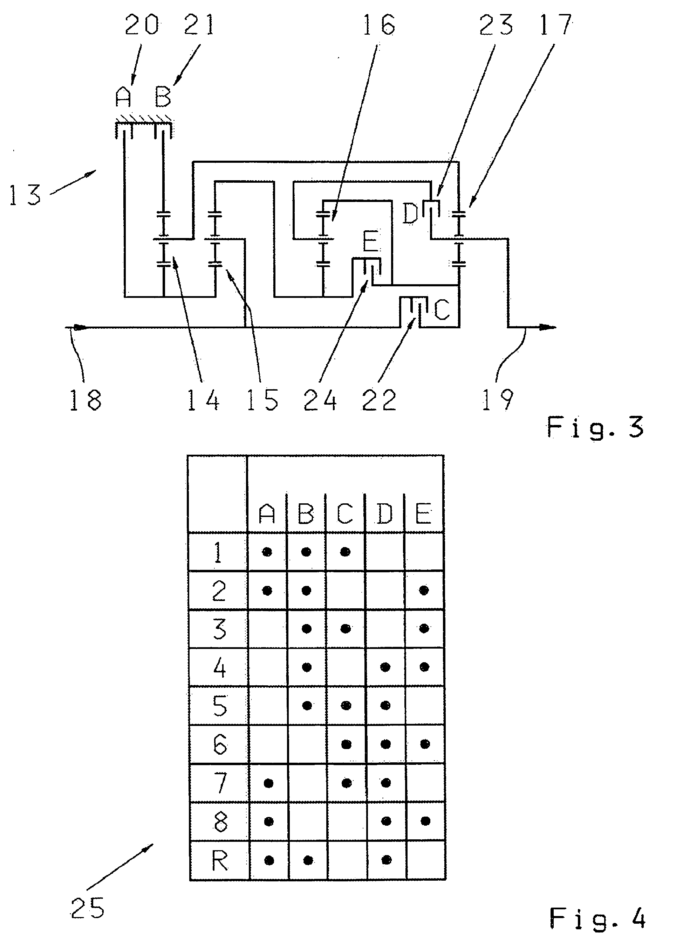

Fig. 3 zeigt ein zweites Getriebeschema 13 eines Stufenautomatgetriebes, bei welchem das erfindungsgemäße Verfahren zum Betreiben eines Automatgetriebes Verwendung finden kann. So verfügt das Automatgetriebe der Fig. 3 über insgesamt vier Getrieberadsätze 14, 15, 16 und 17, um ein an einem Getriebeeingang 18 anliegendes Getriebeeingangsmoment in ein Getriebeausgangsmoment an einem Getriebeausgang 19 umzusetzen. Die Getrieberadsätze 14 bis 17 des Automatgetriebes sind dabei gemäß Fig. 3 wiederum als Planetenrad-Getrieberadsätze ausgeführt. Gemäß dem Getriebeschema 13 der Fig. 3 verfügt das Automatgetriebe neben den vier Getrieberadsätzen 14 bis 17 weiterhin über insgesamt fünf Schaltelemente 20, 21, 22, 23 und 24, wobei das Schaltelement 20 auch als Schaltelement A, das Schaltelement 21 auch als Schaltelement B, das Schaltelement 22 auch als Schaltelement C, das Schaltelement 23 auch als Schaltelement D und das Schaltelement 24 auch als Schaltelement E bezeichnet wird. Bei dem Schaltelement A sowie Schaltelement B handelt es sich jeweils um Bremsen, bei den Schaltelementen C, D und E handelt es sich jeweils um Kupplungen.

Für das in Fig. 3 schematisiert dargestellte Automatgetriebe, welches die fünf Schaltelemente 20 bis 24 umfasst, können unter Verwendung der in Fig. 4 dargestellten Schaltungsmatrix 25 acht Vorwärtsgänge sowie ein Rückwärtsgang realisiert werden, wobei in der linken Spalte der Schaltungsmatrix 25 die acht Vorwärtsgänge "1" bis "8" sowie der Rückwärtsgang "R" und in der oberen Zeile der Schaltungsmatrix 25 die Schaltelemente A bis E aufgetragen sind. Schaltelemente, die in der Schaltelementmatrix 25 mit einem Punkt markiert sind, sind im jeweiligen Gang geschlossen.

In jedem Vorwärtsgang sowie im Rückwärtsgang sind demnach jeweils drei der fünf Schaltelemente geschlossen. So sind z. B. für den Vorwärtsgang "1" die Schaltelemente A, B und C sowie für den Rückwärtsgang "R" die Schaltelemente A, B und D geschlossen. Die anderen Schaltelemente sind hingegen im jeweiligen Gang vollständig geöffnet. Zur Kraftübertragung bzw. Drehmomentübertragung vom Getriebeeingang 18 auf den Getriebeausgang 19 sind demnach bei dem in Fig. 3 dargestellten Automatgetriebe in jedem Gang drei Schaltelemente vollständig geschlossen, zwei Schaltelemente sind hingegen vollständig geöffnet.

Auch im Zusammenhang mit dem Automatgetriebe gemäß Fig. 3 und 4 sind aufeinanderfolgende Hochschaltungen bzw. aufeinanderfolgende Rückschaltungen verschachtelt ausführbar, und zwar wiederum derart, dass während einer laufenden ersten Hochschaltung bzw. Rückschaltung mindestens ein für eine nachfolgende zweite Hochschaltung bzw. Rückschaltung benötigtes Schaltelement vorbereitet wird.

Dabei zeigt die nachfolgende Tabelle 2 eine mögliche Implementierung des erfindungsgemäßen Verfahrens für das Automatgetriebe der Fig. 3 und 4, wobei für die Tabelle 2 dieselbe Nomenklatur gültig ist wie für die Tabelle 1 des Automatgetriebes der Fig. 1 und 2.

| Tabelle 2 | Schaltelemente des Automatgetriebes der Fig. 3, 4 | | | | |
|---|---|---|---|---|---|
| | A | B | C | D | E |
| Rückschaltung | | | | | |
| 8-7 (7-6) | va | - | z | x | a/vz |
| 7-6 (6-5) | a | vz | - | x | z/va |
| 6-5 (5-4) | - | z | va | x | a/vz |
| 5-4 (4-3) | - | x | a/vz | va | z |
| 4-3 (3-2) | vz | x | z/va | a | - |
| 3-2 (2-1) | z | x | a/vz | - | va |
| 2- 1 | x | x | z | - | a |
| 8-6 (6-5) | a | vz | z | x | va |
| 7-5 (5-4) | a | z | va | x | vz |
| 6-4 (4-3) | - | z | a/vz | va | x |
| 5-3(3-2) | vz | x | va | a | z |
| 4-2 (2-1) | z | x | vz | a | va |
| 3-1 | z | x | x | - | a |
| 8-4(4-3) | a | z | vz | va | x |
| 8-2 (2-1) | x | z | vz | a | va |
| 7-1 | x | z | x | a | - |
| 6-3 (3-2) | vz | z | va | a | x |
| 5-1 | z | x | x | a | - |

| Hochschaltung | | | | | |
|---|---|---|---|---|---|
| 1-2 (2-3) | va | x | a/vz | - | z |
| 2-3(3-4) | a | x | z/va | vz | x |
| 3-4(4-5) | - | x | a/vz | z | va |
| 4-5(5-6) | - | va | z | x | a/vz |
| 5-6(6-7) | vz | a | x | x | z/va |
| 6-7(7-8) | z | - | va | x | a/vz |
| 7-8 | x | - | a | x | z |
| 1-3(3-4) | a | x | va | vz | z |
| 2-4 (4-5) | a | x | vz | z | va |
| 3-5 (5-6) | - | va | x | z | a/vz |
| 4-6 (6-7) | vz | a | z | x | va |
| 5-7 (7-8) | z | a | va | x | vz |
| 6-8 | z | - | a | x | x |

Bei Verwendung der Tabelle 2 für das Automatgetriebe der Fig. 3 und 4 werden abhängig von einem auszuführenden Gangwechsel von einem Ist-Gang in einen Soll-Gang sowohl als erste Hochschaltungen als auch als erste Rückschaltungen Mehrfachschaltungen gegenüber Einfachschaltungen bevorzugt ausgeführt. Während einer Ausführung einer solchen Mehrfachschaltung wird nach Tabelle 2 als zweite nachfolgende Hochschaltung bzw. Rückschaltung eine Einfachschaltung vorbereitet. Gemäß Tabelle 2 können als Mehrfachschaltungen ausgeführte Rückschaltungen Doppelrüdkschaltungen, Dreifachrückschaltungen, Vierfachrückschaltungen sowie Sechsfachrückschaltungen sein. Beim Hochschalten werden als Mehrfachschaltungen gemäß Tabelle 2 Doppelschaltungen als erste Schaltungen ausgeführt.

Ebenso ist es für das Automatgetriebe der Fig. 3 und 4 möglich, wie die nachfolgende Tabelle 3 zeigt, bei der verschachtelten Ausführung aufeinanderfolgender Hochschaltungen bzw. aufeinanderfolgender Rückschaltungen als erste Hochschaltung bzw. Rückschaltung eine Mehrfachschaltung, so z. B. eine Doppelschaltung bzw. Vierfachschaltung auszuführen, während derer dann als zweite nachfolgende Hochschaltung bzw. Rückschaltung eine Mehrfachschaltung, nämlich eine Doppelschaltung, vorbereitet wird. Auch für die nachfolgende Tabelle 3 gilt die im Zusammenhang mit der Tabelle 1 erläuterte Nomenklatur.

| Tabelle 3 | Schaltelemente des Automatgetriebes der Fig. 3,4 | | | | |
|---|---|---|---|---|---|
| | A | B | C | D | E |
| Rückschaltung | | | | | |
| 8-6(6-4) | a | vz | z/va | x | x |
| 7-5(5-3) | a | z | x | va | vz |
| 6-4(4-2) | vz | z | a | va | x |
| 5-3(3-1) | vz | x | x | a | z/va |
| 8-4(4-2) | a/vz | z | - | va | x |

| Hochschaltung | | | | | |
|---|---|---|---|---|---|
| 4-6(6-8) | vz | a | z/va | x | x |

Im Sinne des erfindungsgemäßen Verfahrens zum Betreiben eines Automatgetriebes werden demnach bei der verschachtelten Ausführung aufeinanderfolgender Hochschaltungen bzw. aufeinanderfolgender Rückschaltungen als erste Hochschaltungen bzw. Rückschaltungen Mehrfachschaltungen gegenüber Einfachschaltungen bevorzugt ausgeführt. Während der Ausführung einer solchen Mehrfachschaltung wird für eine möglicherweise nachfolgende Hochschaltung bzw. Rückschaltung als zweite Hochschaltung bzw. Rückschaltung entweder eine Mehrfachschaltung oder eine Einfachschaltung vorbereitet. Nur dann, wenn ein Gangwechsel zwischen zwei unmittelbar aufeinander folgenden Gängen auszuführen ist, wird als erste Hochschaltung bzw. Rückschaltung eine Einfachschaltung ausgeführt, während derer als zweite nachfolgende Hochschaltung bzw. Rückschaltung ebenfalls eine Einfachschaltung vorbereitet werden kann. Ob eine vorbereite zweite Hochschaltungen bzw. Rückschaitungen auch tatsächlich ausgeführt wird, hängt vom Fahrerwunsch ab. Entspricht eine vorbereite zweite Hochschaltungen bzw. Rückschaltungen nicht dem Fahrerwunsch, so wird dieselbe abgebrochen. Die Auswahl der während einer ausgeführten ersten Hochschaltung bzw. Rückschaltung für eine zweite Hochschaltung bzw. Rückschaltung vorzubereitenden Schaltelemente erfolgt über eine Zuordnungsmatrix im Sinne der Tabellen 1 bis 3.

### Bezugszeichen

- 1: Getriebeschema
- 2: Getrieberadsatz
- 3: Getrieberadsatz
- 4: Getrieberadsatz
- 5: Getriebeeingang
- 6: Getriebeausgang
- 7: Schaltelement A
- 8: Schaltelement B
- 9: Schaltelement C
- 10: Schaltelement D
- 11: Schaltelement E
- 12: Schaltelementmatrix
- 13: Getriebeschema
- 14: Getrieberadsatz
- 15: Getrieberadsatz
- 16: Getrieberadsatz
- 17: Getrieberadsatz
- 18: Getriebeeingang
- 19: Getriebeausgang
- 20: Schaltelement A
- 21: Schaltelement B
- 22: Schaltelement C
- 23: Schaltelement D
- 24: Schaltelement E
- 25: Schaltelementmatrix

## Patentansprüche

1. Verfahren zum Betreiben eines Automatgetriebes eines Kraftfahrzeugs, insbesondere eines Stufenautomatgetriebes, wobei das Automatgetriebe mehrere Schaltelemente aufweist, wobei zur Momentübertragung bzw. Kraftübertragung in einem Vorwärtsgang und in einem Rückwärtsgang eine erste Anzahl von Schaltelementen geschlossen und eine zweite Anzahl von Schaltelementen geöffnet sind, und wobei aufeinanderfolgende Hochschaltungen bzw. aufeinanderfolgende Rückschaltungen zur Verbesserung der Schaltgeschwindigkeit derart verschachtelt ausführbar sind, dass bei einer ersten Hochschaltung bzw. Rückschaltung mindestens ein für eine nachfolgende zweite Hochschaltung bzw. Rückschaltung benötigtes Schaltelement während der laufenden ersten Hochschaltung bzw. Rückschaltung derart vorbereitet wird, dass bei Erreichen eines Synchronpunkts der laufenden ersten Hochschaltung bzw. Rückschaltung die sofortige Durchführung der nachfolgenden zweiten Hochschaltung bzw. Rückschaltung möglich ist, **dadurch gekennzeichnet, dass** abhängig von einem auszuführenden Gangwechsel von einem Ist-Gang in einen Soll-Gang als erste Hochschaltung bzw. Rückschaltung eine Mehrfachschaltung gegenüber einer Einfachschaltung bevorzugt ausgeführt wird, derart, dass ausschließlich dann, wenn ein Gangwechsel zwischen zwei unmittelbar aufeinanderfolgenden Gängen auszuführen ist, als erste Hochschaltung bzw. Rückschaltung eine Einfachschaltung ausgeführt wird,
und dass dann, wenn ein Gangwechsel zwischen zwei nicht unmittelbar aufeinanderfolgenden Gängen auszuführen ist, als erste Hochschaltung bzw. Rückschaltung immer eine Mehrfachschaltung ausgeführt wird.

2. Verfahren nach Anspruch 1, **dadurch gekennzeichnet, dass** dann, wenn als erste Hochschaltung bzw. Rückschaltung eine Einfachschaltung ausgeführt wird, während der laufenden ersten Hochschaltung bzw. Rückschaltung als nachfolgende zweite Hochschaltung bzw. Rückschaltung eine Einfachschaltung vorbereitet wird.

3. Verfahren nach Anspruch 1, **dadurch gekennzeichnet, dass** dann, wenn als erste Hochschaltung bzw. Rückschaltung eine Mehrfachschaltung ausgeführt wird, während der laufenden ersten Hochschaltung bzw. Rückschaltung als nachfolgende zweite Hochschaltung bzw. Rückschaltung eine Einfachschaltung vorbereitet wird.

4. Verfahren nach Anspruch 1, **dadurch gekennzeichnet, dass** dann, wenn als erste Hochschaltung bzw. Rückschaltung eine Mehrfachschaltung ausgeführt wird, während der laufenden ersten Hochschaltung bzw. Rückschaltung als nachfolgende zweite Hochschaltung bzw. Rückschaltung ebenfalls eine Mehrfachschaltung vorbereitet wird.

5. Verfahren nach einem oder mehreren der Ansprüche 1 bis 4, **dadurch gekennzeichnet, dass** das Automatgetriebe fünf Schaltelemente aufweist, wobei zur Momentübertragung bzw. Kraftübertragung in einem Vorwärtsgang und in einem Rückwärtsgang zwei Schaltelemente geschlossen und drei Schaltelemente geöffnet sind.

6. Verfahren nach einem oder mehreren der Ansprüche 1 bis 4, **dadurch gekennzeichnet, dass** das Automatgetriebe mindestens fünf Schaltelemente aufweist, wobei zur Momentübertragung bzw. Kraftübertragung in einem Vorwärtsgang und in einem Rückwärtsgang mindestens drei Schaltelemente geschlossen sind.

7. Verfahren nach einem oder mehreren der Ansprüche 1 bis 4, **dadurch gekennzeichnet, dass** das Automatgetriebe mindestens fünf Schaltelemente aufweist, wobei zur Momentübertragung bzw. Kraftübertragung in einem Vorwärtsgang und in einem Rückwärtsgang maximal zwei Schaltelemente geöffnet sind.

8. Verfahren nach einem oder mehreren der Ansprüche 1 bis 4, **dadurch gekennzeichnet, dass** das Automatgetriebe fünf Schaltelemente aufweist, wobei zur Momentübertragung bzw. Kraftübertragung in einem Vorwärtsgang und in einem Rückwärtsgang drei Schaltelemente geschlossen und zwei Schaltelemente geöffnet sind.

## Claims

1. Method for operating an automatic transmission of a motor vehicle, in particular a multi-step automatic transmission, wherein the automatic transmission has a plurality of shift elements, wherein in order to transmit torque or power a first number of shift elements are closed and a second number of shift elements are opened in a forward gearspeed and in a reverse gearspeed, and wherein in order to improve the shifting speed successive shifting up or successive shifting down operations can be carried out in an interleaved fashion such that in the case of a first shifting up or shifting down operation at least one shift element which is required for a successive second shifting up or shifting down operation is prepared during the current first shifting up or shifting down operation in such a way that when a synchronous point of the current first shifting up or shifting down operation is reached, the subsequent second shifting up or shifting down operation can be immediately carried out, **characterized in that** a multiple shifting operation as opposed to a single shifting operation is preferably carried out as a function of a gearspeed change which is to be carried out for an actual gearspeed into a target gearspeed as a first shifting up or shifting down operation, such that a single shifting operation is carried out as a first shifting up or shifting down operation only if a gearspeed change is to be carried out between two directly successive gearspeeds,
and **in that** a multiple shifting operation is always carried out as a first shifting up or shifting down operation when a gearspeed change is to be carried out between two indirectly successive gearspeeds.

2. Method according to Claim 1, **characterized in that** when a single shifting operation is carried out as the first shifting up or shifting down operation, a single shifting operation is prepared as a subsequent second shifting up or shifting down operation during the current first shifting up or shifting down operation.

3. Method according to Claim 1, **characterized in that** when a multiple shifting operation is carried out as the first shifting up or shifting down operation, a single shifting operation is prepared as a subsequent second shifting up or shifting down operation during the current first shifting up or shifting down operation.

4. Method according to Claim 1, **characterized in that** when a multiple shifting operation is carried out as a first shifting up or shifting down operation, a multiple shifting operation is likewise prepared as a subsequent second shifting up or shifting down operation during the current first shifting up or shifting down operation.

5. Method according to one or more of Claims 1 to 4, **characterized in that** the automatic transmission has five shift elements, wherein in order to transmit torque or force two shift elements are closed and three shift elements are opened in a forward gearspeed and in a reverse gearspeed.

6. Method according to one or more of Claims 1 to 4, **characterized in that** the automatic transmission has at least five shift elements, wherein in order to transmit torque or force at least three shift elements are closed in a forward gearspeed and in a reverse gearspeed.

7. Method according to one or more of Claims 1 to 4, **characterized in that** the automatic transmission has at least five shift elements, wherein in order to transmit torque or force at most two shift elements are opened in a forward gearspeed and in a reverse gearspeed.

8. Method according to one or more of Claims 1 to 4, **characterized in that** the automatic gearspeed has five shift elements, wherein in order to transmit torque or force three shift elements are closed and two shift elements are opened in a forward gearspeed and in a reverse gearspeed.

## Revendications

1. Procédé pour le fonctionnement d'une boîte de vitesses automatique d'un véhicule automobile, en particulier d'une boîte de vitesses automatique à rapports étagés, dans lequel la boîte de vitesses automatique présente plusieurs éléments de commutation, dans lequel, pour le transfert de couple ou le transfert de force dans une vitesse de marche avant et dans une vitesse de marche arrière, un premier nombre d'éléments de commutation est fermé et un deuxième nombre d'éléments de commutation est ouvert, et dans lequel des passages successifs à une vitesse supérieure ou des rétrogradages successifs peuvent être réalisés pour améliorer la vitesse de commutation de manière emboîtée de telle sorte que lors d'un premier passage à une vitesse supérieure ou d'un premier rétrogradage, au moins un élément de commutation nécessaire pour un deuxième passage suivant à une vitesse supérieure ou un deuxième rétrogradage suivant soit préparé pendant le premier passage à la vitesse supérieure ou le premier rétrogradage en cours de telle sorte qu'à l'obtention d'un point synchrone du premier passage à une vitesse supérieure ou du premier rétrogradage en cours, la mise en oeuvre immédiate du deuxième passage suivant à la vitesse supérieure ou du deuxième rétrogradage suivant soit possible, **caractérisé en ce que**, en fonction d'un changement de vitesse à effectuer depuis une vitesse actuelle dans une vitesse de consigne, une sélection multiple est réalisée de préférence à une sélection simple, en tant que premier passage à une vitesse supérieure ou premier rétrogradage, de telle sorte que seulement lorsqu'un changement de vitesse doit être effectué entre deux vitesses immédiatement successives, on effectue une sélection simple en tant que premier passage à une vitesse supérieure ou premier rétrogradage, et **en ce que**, lorsqu'un changement de vitesse doit être effectué entre deux vitesses pas directement successives, on effectue toujours une sélection multiple en tant que premier passage à une vitesse supérieure ou premier rétrogradage.

2. Procédé selon la revendication 1, **caractérisé en ce que** lorsqu'une sélection simple est réalisée en tant que premier passage à une vitesse supérieure ou premier rétrogradage, pendant le premier passage à une vitesse supérieure ou le premier rétrogradage en cours, une sélection simple est préparée en tant que deuxième passage suivant à une vitesse supérieure ou deuxième rétrogradage suivant.

3. Procédé selon la revendication 1, **caractérisé en ce que** lorsqu'une sélection multiple est réalisée en tant que premier passage à une vitesse supérieure ou premier rétrogradage, pendant le premier passage à une vitesse supérieure ou le premier rétrogradage en cours, une sélection simple est préparée en tant que deuxième passage suivant à une vitesse supérieure ou deuxième rétrogradage suivant.

4. Procédé selon la revendication 1, **caractérisé en ce que** lorsqu'une sélection multiple est réalisée en tant que premier passage à une vitesse supérieure ou premier rétrogradage, pendant le premier passage à une vitesse supérieure ou le premier rétrogradage en cours, une sélection multiple est également préparée en tant que deuxième passage suivant à une vitesse supérieure ou deuxième rétrogradage suivant.

5. Procédé selon l'une quelconque ou plusieurs des revendications 1 à 4, **caractérisé en ce que** la boîte de vitesses automatique présente cinq éléments de commutation, et pour le transfert de couple ou le transfert de force dans une vitesse de marche avant et dans une vitesse de marche arrière, deux éléments de commutation sont fermés et trois éléments de commutation sont ouverts.

6. Procédé selon l'une quelconque ou plusieurs des revendications 1 à 4, **caractérisé en ce que** la boîte de vitesses automatique présente au moins cinq éléments de commutation, et pour le transfert de couple ou le transfert de force dans une vitesse de marche avant et dans une vitesse de marche arrière, au moins trois éléments de commutation sont fermés.

7. Procédé selon l'une quelconque ou plusieurs des revendications 1 à 4, **caractérisé en ce que** la boîte de vitesses automatique présente au moins cinq éléments de commutation, et pour le transfert de couple ou le transfert de force dans une vitesse de marche avant et dans une vitesse de marche arrière, au maximum deux éléments de commutation sont ouverts.

8. Procédé selon l'une quelconque ou plusieurs des revendications 1 à 4, **caractérisé en ce que** la boîte de vitesses automatique présente cinq éléments de commutation, et pour le transfert de couple ou le transfert de force dans une vitesse de marche avant et dans une vitesse de marche arrière, trois éléments de commutation sont fermés et deux éléments de commutation sont ouverts.
